## Europäisches Patentamt
## European Patent Office
## Office européen des brevets

(19)

(11) Veröffentlichungsnummer: **0 214 517**
**B1**

(12) **EUROPÄISCHE PATENTSCHRIFT**

(45) Veröffentlichungstag der Patentschrift:
23.05.90

(51) Int. Cl.⁵: **B60H 1/00**

(21) Anmeldenummer: 86111495.7

(22) Anmeldetag: 19.08.86

(54) Heizungskreislauf für Kraftfahrzeuge mit Latentwärmespeicher.

(30) Priorität: 12.09.85 DE 3532492

(43) Veröffentlichungstag der Anmeldung:
18.03.87 Patentblatt 87/12

(45) Bekanntmachung des Hinweises auf die Patenterteilung:
23.05.90 Patentblatt 90/21

(84) Benannte Vertragsstaaten:
DE FR GB IT SE

(56) Entgegenhaltungen:
DE-A- 2 524 943
DE-A- 2 719 616
DE-A- 3 245 026
DE-A- 3 317 205
DE-U- 8 420 082
DE-U- 8 420 082
GB-A- 1 082 501

(73) Patentinhaber: Süddeutsche Kühlerfabrik Julius Fr. Behr GmbH & Co. KG, Mauserstrasse 3,
D-7000 Stuttgart 30(DE)

(72) Erfinder: Kampf, Hans, Dipl.-Ing., Bernsteinstrasse 45,
D-7000 Stuttgart 75(DE)
Erfinder: Kern, Josef, Dipl.-Ing., Im Bühl 5,
D-7077 Alfdorf(DE)
Erfinder: Wallner, Rolf, Dr.-Ing., Stitzenburgstrasse 4,
D-7000 Stuttgart 1(DE)
Erfinder: Weible, Reinhold, Dipl.-Ing. (FH),
Helmulfstrasse 8, D-7000 Stuttgart 40(DE)

(74) Vertreter: Heumann, Christian et al, Süddeutsche Kühlerfabrik Julius Fr. Behr GmbH & Co. KG
Patentabteilung Mauserstrasse 3 Postfach 30 09 20,
D-7000 Stuttgart 30(DE)

ACTORUM AG

**Beschreibung**

Die Erfindung bezieht sich auf einen Heizungskreislauf für Kraftfahrzeuge mit einem Latentwärmespeicher, dessen Speicherwärme für die Heizung des Kraftfahrzeuges ausgenutzt wird.

Ein derartiger Heizungskreislauf wurde durch die DE-A1 3 317 205 bekannt.

Bei diesem bekannten Heizungskreislauf ist der Latentwärmespeicher wasserseitig in Reihe mit einem konventionellen sog. Luftwärmetauscher geschaltet, der die über das Kühlmittel aufgenommene Wärme an einen von einem Gebläse geförderten Luftstrom abgibt, der den Innenraum des Fahrzeuges beheizt. Diese Anordnung hat zwar den Vorteil, daß die vom Speicher abgegebene Wärme für die Heizung des Kraftfahrzeuges ausgenutzt werden kann, und zwar insbesondere dann, wenn der Kühlmittelkreislauf noch nicht hinreichend aufgeheizt ist, hat aber andererseits den Nachteil, daß die Vorlauftemperatur für den Luftheizkörper zu niedrig ist und somit die Luft nur mäßig erwärmt werden kann. Außerdem wird die vom Latentwärmespeicher abgegebene Wärme dem gesamten Kühlmittelkreislauf zugeführt, was infolge der hohen Wärmekapazität des Gesamtkreislaufes nur zu einer sehr langsamen Aufwärmung führt. Insofern ist die vom Latentwärmespeicher gelieferte Wärme für die Schaffung eines behaglichen Klimas im Fahrzeuginnenraum nur unzureichend ausgenutzt.

Aufgabe der Erfindung ist es, die Speicherwärme eines Latentwärmespeichers dahingehend besser auszunutzen, daß ein behaglicheres Klima im Fahrzeuginnenraum geschaffen wird, und zwar insbesondere während der Anwärmphase des Motors.

Erfindungsgemäß wird diese Aufgabe dadurch gelöst, daß an den Heizungskreislauf weitere Heizkörper angeschlossen sind, die als sog. Flächenwärmetauscher oder Plattenheizkörper ausgebildet und im Innenraum des Fahrzeugs am Fußboden und/oder an den Seitenwänden bzw. Türen angeordnet sind, und daß der Latentwärmespeicher und die Flächenwärmetauscher als in sich geschlossener Kreislauf geschaltet bzw. schaltbar sind.

Derartige Plattenheizkörper, im folgenden Flächenwärmetauscher genannt, sind an sich bekannt, und zwar durch das DE-U1 8 420 082 der Anmelderin. Bei dieser vorbekannten Anordnung sind die Plattenheizkörper wasserseitig parallel zum herkömmlichen Luftheizkörper geschaltet, ein Latentwärmespeicher ist bei dieser Heizungsanlage jedoch nicht vorgesehen, vielmehr wird die Heizungswärme ausschließlich und direkt vom aufgeheizten Kühlmittel des Motors geliefert.

Durch die erfindungsgemäße Verbindung von Latentwärmespeicher und Flächenwärmetauschern ergibt sich in vorteilhafter Weise eine Steigerung der Behaglichkeit des Klimas im Fahrzeuginnenraum. Die Vorlauftemperatur für die Flächenwärmetauscher wird durch die Austrittstemperatur des Latentwärmespeichers bestimmt; diese relativ niedrige Temperatur, die von der Schmelztemperatur des Speichermediums abhängt, ist für den Betrieb der Flächenwärmetauscher insofern besonders vorteilhaft, da diese keine zu hohe Oberflächentemperatur erhalten sollen und andererseits schon mit einer niedrigeren Temperatur ein behagliches Klima im Innenraum des Fahrzeuges schaffen. Dies geht vor allem auf die unterschiedliche Wirkungsweise zwischen Flächenwärmetauschern einerseits und herkömmlichen Luftwärmetauschern andererseits zurück: Der sog. Luftwärmetauscher – ein Rippenrohrsystem – benötigt auf der Luftseite hohe Oberflächentemperaturen, da die Luft zur Beheizung des Fahrzeuginnenraumes stark erwärmt werden muß. Die Flächenwärmetauscher dagegen übertragen die Wärme weniger durch Konvektion – wie die Luftwärmetauscher – sondern durch Strahlung. In diesem Falle ist zur Schaffung eines behaglichen Klimas eine niedrigere Oberflächentemperatur erwünscht. Gerade dies wird durch die Kombination von Flächenwärmetauscher und Latentwärmespeicher erreicht.

Nach Anspruch 1 sind die Flächenwärmetauscher und der Latentwärmespeicher zu einem in sich geschlossenen Kreislauf innerhalb des gesamten Heizungskreislaufes geschaltet. Dies hat den Vorteil, daß die vom Latentwärmespeicher abgegebene Wärme nur in die Flächenwärmetauscher fließen, damit ausschließlich zur Beheizung des Innenraumes genutzt werden und somit ein behagliches Klima im Fahrzeuginnenraum erzeugen kann.

Vorteilhafte Weiterbildungen der Erfindung ergeben sich aus den Unteransprüchen.

Ein Ausführungsbeispiel der Erfindung ist in den Zeichnungen dargestellt und wird im folgenden näher beschrieben. Es zeigen

Figur 1 das Schaltschema für den erfindungsgemäßen Heizungskreislauf und

Figur 2 den Innenraum eines Kraftfahrzeuges mit den erfindungsgemäßen Flächenwärmetauschern.

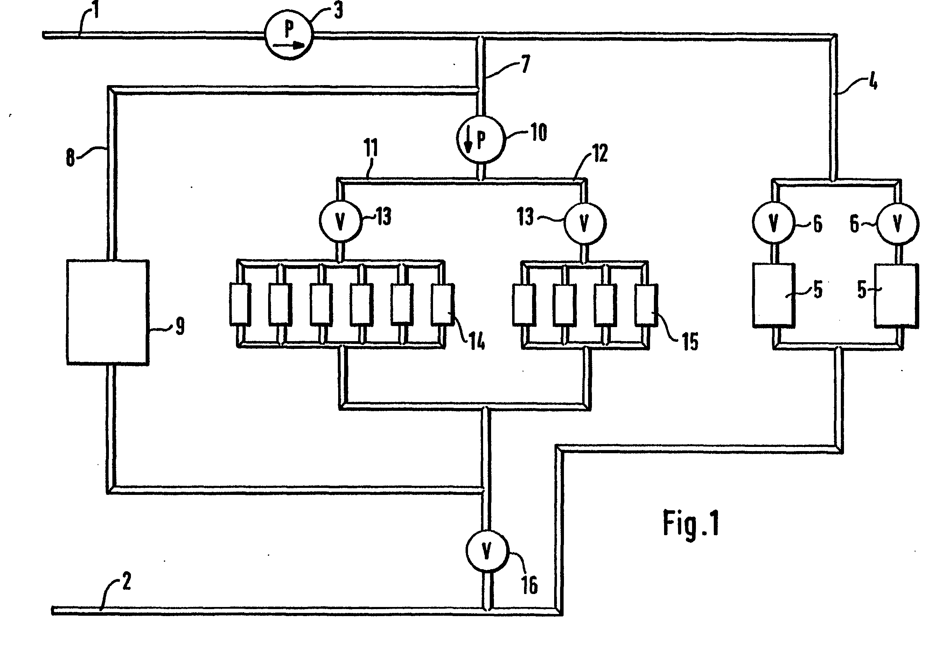

Der in Figur 1 dargestellte Heizungskreislauf ist über den Vorlauf 1 und den Rücklauf 2 in bekannter Weise an den Kühlmittelkreislauf der Brennkraftmaschine eines Kraftfahrzeuges angeschlossen. Die Pumpe 3 fördert das Kühlmittel über den Hauptstrang 4 durch zwei parallel zueinander angeordnete Luftheizkörper 5, die jeweils separat über Ventile 6 regelbar sind (sog. Rechts/Links-Regelung für Fahrer und Beifahrer). Diese sog. Luftheizkörper 5 sind Rippenrohrwärmetauscher, die rohrseitig vom Kühlmittel durchströmt und rippenseitig von Luft überstrichen werden, die von einem Gebläse in den Fahrzeuginnenraum gefördert wird. Parallel zu diesem Hauptstrang 4 ist ein Nebenstrang 7 in den Heizungskreislauf geschaltet, d.h. zwischen Vorlauf 1 und Rücklauf 2 des Heizungskreislaufes. In den Nebenstrang 7 ist eine Zusatzpumpe 10 geschaltet, hinter der sich der Strang in die Zweigleitungen 11 und 12 aufteilt, die jeweils über Regulierventile 13 zu einer Vielzahl von Flächenwärmetauschern 14 bzw. 15 führen, die jeweils untereinander wiederum parallel geschaltet sind. Parallel zu den Flächenwärmetauschern 14 und 15 ist über einen weiteren Nebenstrang 8 ein Latentwärmespeicher 9 geschaltet, so daß die Flächenwärmetauscher 14 und 15 in Verbindung mit der Zusatzpumpe 10 einen in sich geschlossenen Kreislauf bilden. Aufgrund dieser Schaltung kann die vom Latentwärmespeicher 9 abgegebene Wärme vollständig den Flächenwärmetauschern 14 und 15 zugeführt und ausschließlich zur Beheizung des Innenraumes genutzt werden und fließt somit nicht in den Motorkühlkreis über den Rücklauf 2 ab. Für diesen Zweck ist ein Regulierventil 16 am Ende des Nebenstranges 7, also vor dessen Vereinigung mit dem Rücklauf 2, vorgesehen.

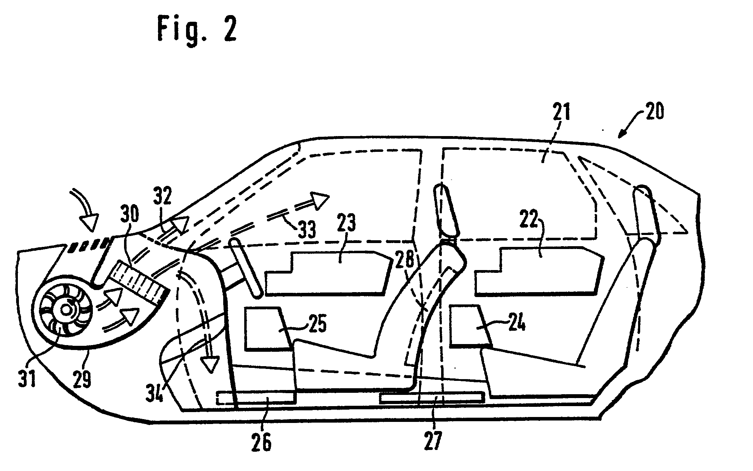

Figur 2 zeigt von einem unvollständig dargestellten Fahrzeug 20 den Innenraum 21, an dessen Seitenwänden die Flächenwärmetauscher 22,23,24,25 und auf dessen Fußboden die Flächenwärmetauscher 26,27 angeordnet sind. Darüberhinaus sind an den Rückseiten der Vordersitzlehnen weitere Flächenwärmetauscher 28 angeordnet. Das Fahrzeug 20 besitzt eine herkömmliche Heizungsanlage 29, die im wesentlichen aus einem Luftheizkörper 30 und einem Gebläse 31 besteht, welches von außen oder innen angesaugte Luft durch den Heizkörper 30 in den Innenraum 21 des Fahrzeuges 20 fördert, und zwar in an sich bekannter, durch die Doppelpfeile 32,33,34 dargestellten Weise. Der Luftheizkörper 30 entspricht also den Heizkörpern 5 in Figur 1 und wird - in Figur 2 nicht dargestellter Weise - ebenfalls vom Kühlmittel durchströmt. Die Flächenwärmetauscher 22 bis 28 in Figur 2 entsprechen den Wärmetauschern 14 und 15 in Figur 1 und werden ebenfalls vom Kühlmittel durchströmt. Aufgrund ihrer Anordnung im Fahrzeuginnenraum 21 geben sie ihre Wärme im wesentlichen durch Strahlung an die Fahrzeuginsassen ab - dadurch kann bei geeigneter Wahl der Oberflächentemperatur der Flächenwärmetauscher die Behaglichkeit des Klimas für die Fahrzeuginsassen gesteigert werden, insbesondere bei niedrigen Außentemperaturen. Die geeignete Oberflächentemperatur wird dabei durch die erfindungsgemäße Verschaltung der Flächenwärmetauscher mit dem Latentwärmespeicher gemäß Figur 1 erreicht.

**Patentansprüche**

1. Heizungskreislauf für Kraftfahrzeuge, insbesondere Pkw, mit mindestens einem vom Kühlmittel der Brennkraftmaschine durchströmten Luftheizkörper, der die Wärme des Kühlmittels durch konvektiven Wärmetausch an von einem Gebläse geförderte Luft zur Beheizung der Fahrzeuginnenraumes abgibt, und mit einem Latentwärmespeicher, dadurch gekennzeichnet, daß an den Heizungskreislauf (1, 2, 3, 4) weitere Heizkörper (14, 15) angeschlossen sind, die als Plattenheizkörper oder Flächenwärmetauscher (22, 23, 24, 25, 26, 27) ausgebildet und im Innenraum (21) des Fahrzeugs (20) am Fußboden und/oder den Seitenwänden angeordnet sind, und daß der Latentwärmespeicher (9) und die Flächenwärmetauscher (14, 15) als in sich geschlossener Kreislauf geschaltet bzw. schaltbar sind.

2. Heizungskreislauf nach Anspruch 1, dadurch gekennzeichnet, daß zusätzliche Flächenwärmetauscher (28) an den Rückseiten der vorderen Sitzlehnen angeordnet sind.

3. Heizungskreislauf nach Anspruch 1 oder 2, dadurch gekennzeichnet, daß die Flächenwärmetauscher (14, 15) zu dem Luftheizkörper (5) wasserseitig durch einen Nebenstrang (7) parallel geschaltet sind.

4. Heizungskreislauf nach einem der Ansprüche 1 bis 3, dadurch gekennzeichnet, daß der Latentwärmespeicher (9) den Flächenwärmetauschern (14, 15) durch einen weiteren Nebenstrang (8) wasserseitig parallel geschaltet ist.

5. Heizungskreislauf nach einem der Ansprüche 3 bis 4, dadurch gekennzeichnet, daß in den Nebenstrang (7) der Flächenwärmetauscher (14, 15) eine Zusatzpumpe (10) geschaltet ist.

6. Heizungskreislauf nach einem der Ansprüche 3 bis 5, dadurch gekennzeichnet, daß der Nebenstrang (7) über ein Regulierventil (16) an den Rücklauf (2) des Heizungskreislaufes angeschlossen ist.

7. Heizungskreislauf nach einem der Ansprüche 1 bis 6, dadurch gekennzeichnet, daß die Flächenwärmetauscher (15) am Fußboden (26, 27) parallel zu den Flächenwärmetauschern (14) an den Seitenwänden (22, 23, 24, 25) und an den Sitzlehnen (28) geschaltet sind.

8. Heizungskreislauf nach Anspruch 7, dadurch gekennzeichnet, daß die Flächenwärmetauscher (15) am Fußboden (26, 27) und die Flächenwärmetauscher (14) an den Seitenwänden (22, 23, 24, 25) und an den Sitzlehnen (28) getrennt regelbar sind.

**Claims**

1. Heating circuit for motor vehicles, particularly passenger cars, comprising at least one air heating element through which the internal combustion engine coolant flows and which transmits the heat of the coolant through convectional heat exchange to air conveyed by a fan to heat the vehicle interior, and comprising a latent heat accumulator, characterised in that other heating elements (14, 15), which are in the form of plate heating elements or surface heat exchangers (22, 23, 24, 25, 26, 27) and are arranged on the floor and/or on the side panels in the interior (21) of the vehicle (20), are connected to the heating circuit (1, 2, 3, 4), and that the latent heat accumulator (9) and the surface heat exchangers (14, 15) are connected or can be connected as a fully enclosed circuit.

2. Heating circuit according to Claim 1, characterised in that additional surface heat exchangers (28) are arranged on the rear sides of the front seats.

3. Heating circuit according to Claim 1 or 2, characterised in that the surface heat exchangers (14, 15) are connected in parallel to the air heating element (5) on the water side by a secondary pipe (7).

4. Heating circuit according to any one of Claims 1 to 3, characterised in that the latent heat accumulator (9) is connected, on the water side, in parallel to the surface heat exchangers (14, 15) by another secondary pipe (8).

5. Heating circuit according to any one of Claims 3 to 4, characterised in that an auxiliary pump (10) is connected to the secondary pipe (7) of the surface heat exchangers (14, 15).

6. Heating circuit according to any one of Claims 3 to 5, characterised in that the secondary pipe (7) is connected to the return line (2) of the heating circuit via a control valve (16).

7. Heating circuit according to any one of Claims 1 to 6, characterised in that the surface heat exchangers (15) on the floor (26, 27) are connected in parallel to the surface heat exchangers (14) on the side panels (22, 23, 24, 25) and on the seat backs (28).

8. Heating circuit according to Claim 7, characterised in that the surface heat exchangers (15) on the floor (26, 27) and the surface heat exchangers (14) on the side panels (22, 23, 24, 25) and on the seat backs (28) can be controlled separately.

## Revendications

1. Circuit de chauffage pour véhicules automobiles, notamment pour véhicules privés, comprenant au moins un radiateur à air parcouru par le fluide de refroidissement du moteur à combustion interne, qui cède la chaleur du fluide de refroidissement, par échange de chaleur par convection, à de l'air mis en mouvement par un ventilateur pour chauffer l'habitacle du véhicule, et un accumulateur de chaleur latente, caractérisé en ce qu'au circuit de chauffage (1, 2, 3, 4), sont raccordés d'autres radiateurs (14, 15) qui sont constitués par des radiateurs à plaques ou échangeurs de chaleur à grande surface (22, 23, 24, 25, 26, 27) et qui sont disposés dans l'habitacle (21) du véhicule (20), au niveau du plancher et/ou au droit des flancs, et en ce que l'accumulateur de chaleur latente (9) et les échangeurs de chaleur à grande surface (14, 15) sont raccordés ou peuvent être raccordés en un circuit fermé sur lui-même.

2. Circuit de chauffage selon la revendication 1, caractérisé en ce que des échangeurs de chaleur à grande surface supplémentaires (28) sont agencés dans les faces arrière des dossiers des sièges avant.

3. Circuit de chauffage selon la revendication 1 ou 2, caractérisé en ce que les échangeurs de chaleur (14, 15) sont branchés en parallèle avec le radiateur à air (5) dans le circuit d'eau au moyen d'une branche secondaire (7).

4. Circuit de chauffage selon une des revendications 1 à 3, caractérisé en ce que l'accumulateur de chaleur latente (9) est branché en parallèle avec les échangeurs de chaleur à grande surface (14, 15) dans le circuit d'eau par une autre branche secondaire (8).

5. Circuit de chauffage selon une des revendications 3 à 4, caractérisé en ce qu'une pompe additionnelle (10) est branchée dans la branche secondaire (7) des échangeurs de chaleur à grande surface (14, 15).

6. Circuit de chauffage selon une des revendications 1 à 3, caractérisé en ce que la branche secondaire (7) est raccordée au retour (2) du circuit de chauffage par une vanne régulatrice (16).

7. Circuit de chauffage selon une des revendications 1 à 3, caractérisé en ce que l'échangeur de chaleur à grande surface (15) prévu au plancher (26, 27) est branché en parallèle avec les échangeurs de chaleur à grande surface (14) prévus au droit des flancs (22, 23, 24, 25) et dans les dossiers (28).

8. Circuit de chauffage selon la revendication 7, caractérisé en ce que les échangeurs de chaleur à grande surface (15) prévus sur le plancher (26, 27), et les échangeurs de chaleur à grande surface (14) prévus le long des flancs (22, 23, 24, 25) et dans les dossiers (28) des sièges peuvent être réglés séparément.

Fig.1

Fig. 2